# NOUVEAU FASCICULE DE BREVET EUROPEEN

(11) **EP 0 979 177 B2**
(45) Date de publication et mention de la décision concernant l'opposition: **18.05.2005**
(45) Mention de la délivrance du brevet: 24.10.2001
(21) Numéro de dépôt: 98922857.2
(22) Date de dépôt: 24.04.1998
(51) Int. Cl.: B60N 2/00, B60N 2/08

(54) **AGENCEMENT POUR LE REGLAGE DE LA POSITION LONGITUDINALE ET LE BLOCAGE EN POSITION REGLEE D'UN SIEGE DE VEHICULE AUTOMOBILE**
ANORDNUNG ZUM LANGSVERSTELLEN UND ZUM VERRIEGELN EINES KRAFTFAHRZEUGSITZES IN GEREGELTER LAGE
ARRANGEMENT FOR ADJUSTING THE LONGITUDINAL POSITION AND MAINTAINING THEREIN A MOTOR VEHICLE SEAT

(30) Priorité: 30.04.1997 FR 9705345
(43) Date de publication de la demande: 16.02.2000
(73) Titulaire: Renault s.a.s., 92100 Boulogne Billancourt (FR)
(72) Inventeur: GIRARDI, Philippe, F-95410 Groslay (FR); AMERIGO, Marc, F-92100 Boulogne Billancourt (FR)
(74) Mandataire: Kohn, Philippe
(86) Numéro de dépôt international: PCT/FR1998/000819
(87) Numéro de publication internationale: WO 1998/049026

(56) Documents cités:
- EP-A- 0 094 438
- EP-A- 0 615 879
- DE-A- 4 321 720
- US-A- 4 273 487
- US-A- 5 158 338
- US-A- 5 236 153

## Description

L'invention propose un agencement pour le réglage de la position longitudinale, et le blocage en position réglée, d'un sous-ensemble, notamment d'un siège, sur le plancher horizontal de l'habitacle d'un véhicule automobile

L'invention concerne plus particulièrement un système pour l'aménagement de l'intérieur d'un véhicule automobile du type "monospace" qui doit présenter de grandes possibilités d'aménagement , et notamment une grande modularité tant quant au nombre de sièges ou de sous-ensembles démontables agencés dans l'habitacle, qu'au nombre de positions que ces sous-ensembles sont susceptibles d'occuper.

Selon une première conception connue, il a déjà été proposer d'aménager des séries de points d'accrochage sur le plancher du véhicule dont chacune, comportant de préférence quatre points d'accrochage pour les quatre pieds du siège ou du sous-ensemble, détermine une position de montage et de fixation.

Afin d'accroître la modularité de l'aménagement de l'habitacle, il a déjà été proposé un agencement qui est par exemple décrit et représenté dans le document EP-A-0.615.879, dans lequel le plancher horizontal de l'habitacle est équipé d'au moins deux rails ou glissières parallèles qui reçoivent en coulissement longitudinal des organes de guidage en forme de coulisseaux, aussi appelés navettes, qui guident des déplacements longitudinaux du siège et qui permettent d'assurer un verrouillage en position longitudinale réglée du siège, ce dernier comportant des pieds d'orientation sensiblement verticale dont les extrémités inférieures comportant des moyens d'accrochage, de conception connue, du siège sur les coulisseaux ou navettes.

Cette solution permet d'accroître la modularité et permet aussi de régler la position longitudinale d'un siège, en conservant son orientation et son accrochage, en déplaçant les coulisseaux.

Toutefois, cette conception fait appel à autant de paires de coulisseaux-navettes que l'on désire monter de sièges et, si on ne souhaite pas que les coulisseaux soient apparents dans l'habitacle, ils doivent être agencés dans le fond de glissières noyées dans le plancher, ce qui rend difficile l'accrochage d'un siège sur les faces supérieures des coulisseaux dans la mesure où celles-ci ne sont pas apparentes et sont masquées par des moyens, en forme de brosse, d'obturation partielle de la fente longitudinale médiane de la glissière en forme de rail.

L'invention a pour but de proposer une nouvelle conception d'un agencement de réglage du type mentionné précédemment qui permet de remédier à ces inconvénients.

Dans ce but l'invention propose un agencement défini à la revendication 1.

D'autres caractéristiques de l'invention sont définies aux revendications 2 à 9.

D'autres avantages de l'invention apparaîtront à la lecture de la description détaillée qui va suivre pour la compréhension de laquelle on se reportera aux dessins annexés dans lesquels :
- La figure 1 est une vue schématique en perspective qui illustre un sous-ensemble associé à deux glissières parallèles pour le réglage de la position longitudinale et le blocage du sous-ensemble ;
- la figure 2 est une vue de détail en perspective qui illustre partiellement un tronçon d'une glissière conforme aux enseignements de l'invention ;
- la figure 3 est une vue en bout, partiellement en section transversale, sur laquelle la partie inférieure d'un pied est illustrée en association avec une glissière, l'ensemble étant représenté lors d'une phase d'engagement du pied dans la glissière ;
- la figure 4 est une vue similaire à celle de la figure 3 dans laquelle le pied est illustré en position de réglage ;
- la figure 5 est une vue similaire à celle de la figure 4 dans laquelle le pied est illustré en position de verrouillage ;
- la figure 6 est une vue similaire à celle de la figure 3 dans laquelle le pied est illustré au cours de sa phase de dégagement hors de la glissière ;
- la figure 7 est une vue latérale du pied dans la glissière ;
- la figure 8 est une vue similaire à celles des figures 3 à 6 qui illustre un deuxième mode de réalisation d'un agencement conforme aux enseignements de l'invention sur laquelle le pied est illustré dans une première partie de sa phase d'engagement dans la glissière ;
- la figure 9 est une vue similaire à celle de la figure 8 dans laquelle le pied est illustré dans une deuxième partie de sa phase d'engagement dans la glissière ;
- la figure 10 est une vue similaire à celle de la figure 9 dans laquelle le pied est illustré en position de réglage ;
- la figure 11 est une vue similaire à celle de la figure 10 dans laquelle le pied est illustré en position bloquée longitudinalement par rapport à la glissière ;
- la figure 12 est une vue similaire à celle de la figure 11 dans laquelle le pied est illustré en position bloquée et verrouillée longitudinalement ; et
- la figure 13 est une vue similaire à celle de la figure 12 dans laquelle le pied est illustré au cours de sa phase de dégagement hors de la glissière.

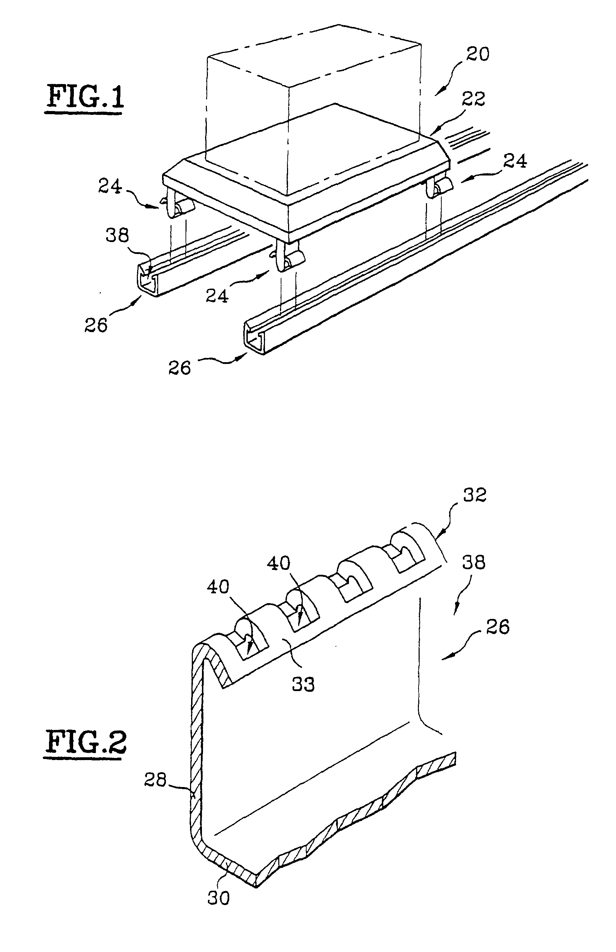

On a représenté à la figure 1 un sous-ensemble, qui est par exemple un siège amovible de véhicule automobile, comportant une structure ou un châssis rigide dont une partie inférieure 22 est équipée, à ses quatre angles opposés, de quatre pieds 24 d'orientation sensiblement vertical.

Chacune des deux paires de pieds alignés est conçue de manière que les extrémités verticales inférieures des pieds 24 soient reçues à l'intérieur de deux glissières, ou coulisses longitudinales et parallèles 26 qui sont prévues pour être fixées sur le plancher horizontal d'un véhicule automobile (non représenté), par exemple sur la face supérieure de ce dernier ou, à titre de variante, logées dans des rainures longitudinales du plancher.

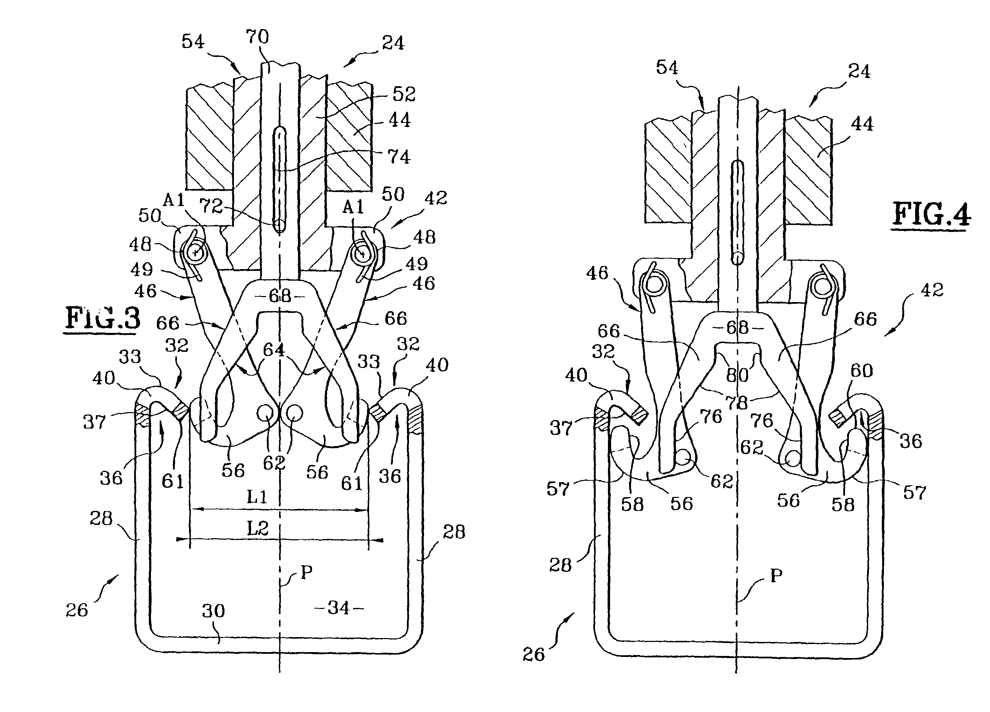

Conformément aux enseignements de l'invention, et comme on peut le voir notamment aux figures 2 et 3, chacune des deux glissières 26 présente une symétrie longitudinale de conception par rapport à un plan vertical longitudinal médian P et elle est ici réalisée sous la forme d'un profilé longitudinal en tôle découpée et pliée.

Chaque glissière présente, en section transversale, une forme générale de U ouvert à sa partie supérieure.

La glissière 26 est constituée pour l'essentiel par deux ailes latérales opposées 28 qui sont reliées entre elles, à leurs extrémités inférieures, par un fond horizontal plat 30.

Les ailes 28 s'étendent parallèlement et sont d'orientation verticale.

A son extrémité supérieure, chaque aile latérale 28 se prolonge transversalement vers l'intérieur par une partie de tôle en forme de bande rabattue vers l'intérieur et vers le bas qui constitue un bord supérieur 32 de la glissière 26 dont les faces supérieures 33 sont inclinées en V vers l'intérieur 34 de la glissière 26 et dont les faces inférieures constituent les portions internes 36 des bords supérieurs 32 au sens de l'invention.

Les bords supérieurs 32 définissent entre eux une fente médiane longitudinale 38 de la glissière 26 de largeur transversale L1.

Chacun des bords supérieurs 32 comporte, comme on peut le voir notamment à la figure 2, une série d'encoches 40 réparties longitudinalement de manière régulière le long du bord 32 dont chacune constitue un cran de blocage et de verrouillage comme cela sera expliqué par la suite.

On décrira maintenant en référence aux figures 1 à 7 le premier mode de réalisation du mécanisme expansible de verrouillage 42, associé à l'extrémité inférieure 44 d'un pied 24, qui est conçu pour coopérer avec le premier mode de réalisation de la glissière 26 illustrée aux figures 2 à 7.

Le mécanisme 42 est constitué pour l'essentiel par deux leviers de verrouillage 46 qui s'étendent sensiblement verticalement et dont chacun est articulé, par son extrémité supérieure 48 et autour d'un axe longitudinal A1, sur une aile inférieure 50, qui s'étend transversalement vers l'extérieur, à partir du corps 52 d'un support 54 du mécanisme expansible 42 qui est monté coulissant verticalement par rapport à la partie inférieure 44 du pied 24.

Chaque levier de verrouillage 46 comporte une partie inférieure active 56 dont la face supérieure 58 est conformée en forme de crochet complémentaire du profil de la face inférieure 37 de la portion interne 36 du bord supérieur en vis-à-vis 32 de la glissière 26.

Le profil de la face supérieure 58 en forme de crochet est aussi tel que, comme cela sera expliqué par la suite, l'extrémité libre 60 de chaque crochet est susceptible de pénétrer au moins partiellement dans une encoche 40.

La surface inférieure 57 de l'extrémité inférieure 56 de chaque levier 46 présente un profil courbe convexe qui est prévu pour coopérer avec les faces supérieures inclinées 33 des bords supérieurs 32 de la glissière 26.

Chaque levier 46 porte, au voisinage de son extrémité inférieure active 56, un doigt de commande 62 qui s'étend longitudinalement à partir d'une face transversale du levier 26 et qui est susceptible de coopérer avec un profil de came 64 formé en vis-à-vis dans l'une des deux branches 66 appartenant à une fourche 68 de commande des leviers 46.

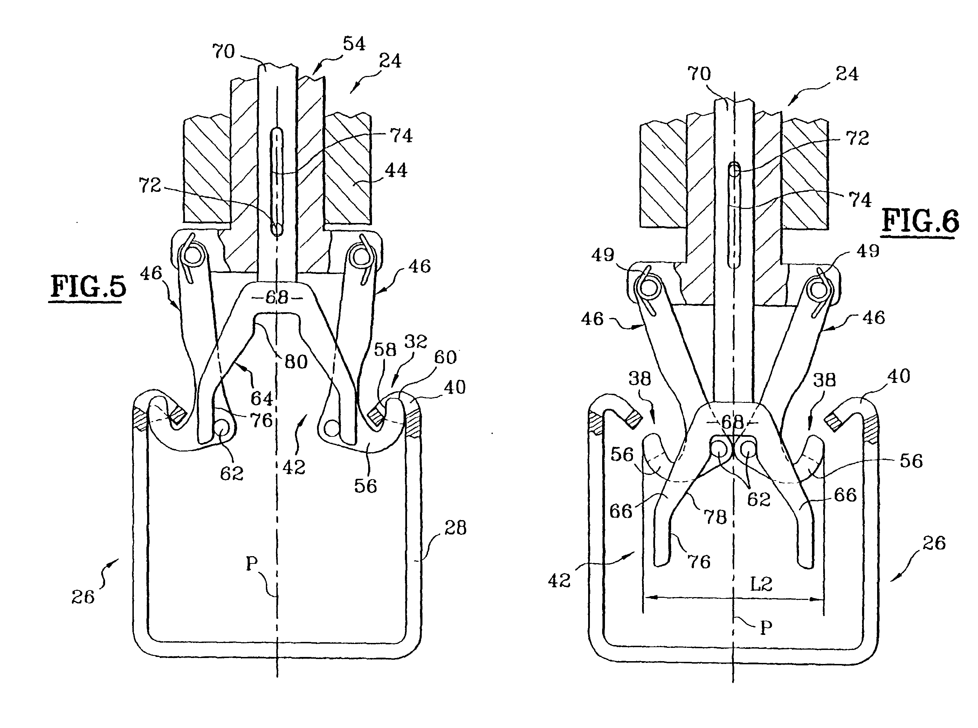

A sa partie supérieure, la fourche 68 comporte une barre verticale de commande 70, qui est montée coulissante verticalement dans le support 54 des leviers 46, entre une position extrême haute illustrée notamment aux figures 3 à 5 et une position extrême basse illustrée à la figure 6.

Les positions extrêmes de la fourche 68 par rapport au support 54 des leviers 46 sont déterminées par la coopération d'un pion de butée 72 avec l'une ou l'autre des deux extrémités opposées d'une boutonnière 74 formée dans la barre de commande 70.

Le profil de came 64 de chacune des branches 66 est formé sur une face latérale interne de la branche et il comporte, successivement de bas en haut, un tronçon vertical inférieur 76, un tronçon incliné intermédiaire 78 et un tronçon vertical supérieur 80, la distance transversale séparant les tronçons verticaux inférieurs parallèles 76 étant nettement supérieure à celle séparant les tronçons verticaux supérieurs parallèles 80.

Chaque levier 46 est équipé d'un ressort 49 qui le rappelle élastiquement en permanence vers une position écartée transversalement vers l'extérieur, c'est-à-dire que les ressorts 49 sollicitent les extrémités inférieures actives 56 des leviers 46 en éloignement l'une de l'autre et par rapport au plan longitudinal médian P.

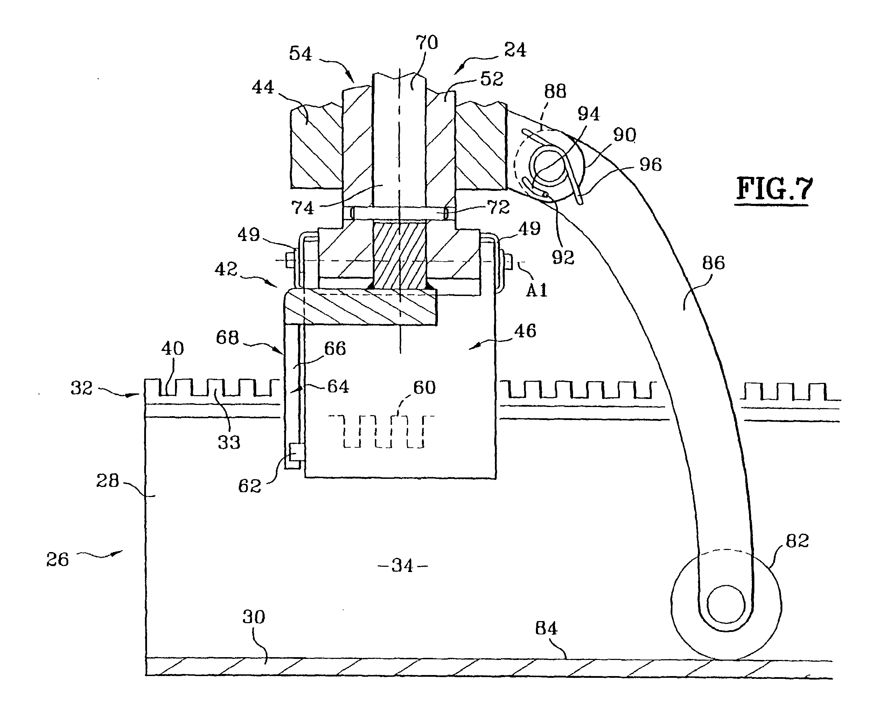

Comme on peut le voir plus particulièrement à la figure 7, les leviers 46 sont de dimension longitudinale importante de manière que leurs extrémités inférieures actives 56 en forme de crochets présentent une série d'extrémités 60 réparties longitudinalement selon le même pas que celui des encoches 40 pour améliorer la coopération des leviers avec les bords supérieurs 32 de la glissière 26.

Afin d'assurer le guidage des déplacements longitudinaux du pied 24 par rapport à la glissière 26, notamment en vue de permettre un réglage de la position longitudinale du pied 24, à la partie inférieure 44 est équipée d'un galet 82 qui roule le long de la face horizontale supérieure 84 du fond 30 et qui est monté à rotation, autour d'un axe transversal, l'extrémité inférieure d'un bras d'articulation 86 dont l'extrémité supérieure 88 est montée articulée, autour d'un axe transversal, sur une patte longitudinale 90 de la partie inférieure 44 du pied 24.

Le bras 86 peut pivoter entre deux positions angulaires extrêmes qui sont déterminées par la coopération d'un pion 92 avec les extrémités opposées d'une lumière 94 formée dans la patte 90.

Le bras 86 est sollicité élastiquement vers l'une de ses deux positions angulaires extrêmes, en rapprochement de l'axe général du pied, par un ressort spiral 96 (voir figure 7).

Lorsque le bras articulé 86 est dans sa position angulaire maximale illustrée à la figure 7, la coopération du galet 82 avec la face supérieure 84 du fond 30 détermine l'altitude du pied 24 par rapport à la glissière 26.

On décrira maintenant le fonctionnement de l'agencement de réglage et de verrouillage en référence aux figures 3 à 6.

Lors de la phase d'engagement du mécanisme expansible 42 à l'intérieur 34 de la glissière 26, illustrée à la figure 3, les surfaces inférieures incurvées convexes 57 des leviers 46 coopèrent avec les faces supérieures inclinées 33 des bords supérieurs 32 pour provoquer un rapprochement mutuel des leviers 46 de manière que la largeur transversale maximale L2 du mécanisme soit inférieure ou égale à la largeur L1 de la fente pour permettre l'introduction verticale de haut en bas des leviers 46 dans la glissière 26.

Au cours de cette phase d'engagement, le support 54 des leviers 46 est fixe par rapport à la partie inférieure 44 du pied 24 en position basse par rapport à celle-ci.

A partir de la position illustrée à la figure 3, l'engagement se poursuit jusqu'à ce que les extrémités 60 des crochets inférieurs des leviers 46 passent en dessous des angles inférieurs 61 des bords supérieurs 32.

En dessous de cette altitude, et sous l'action des ressorts 49, les leviers 46 s'écartent instantanément transversalement vers l'extérieur jusqu'à ce que les pions de commande 62 viennent en butée contre les tronçons verticaux inférieurs 76 des profils de came 64 de la fourche de commande 68.

Dans cette position illustrée à la figure 4, les extrémités inférieures 56 en forme de crochets 58, 60 des leviers 46 s'étendent en regard des faces inférieures 37 des portions internes 36 des bords supérieurs 32 de la glissière 26 et il est ainsi impossible d'extraire verticalement le mécanisme 42 hors de la glissière 26, c'est-à-dire que le pied 24 est retenu verticalement vers le haut par rapport à la glissière 26.

L'altitude des crochets 58, 60, c'est-à-dire le jeu vertical qui existe entre leurs extrémités 60 et les faces inférieures 37 est déterminé par la venue en butée du bras 86 comme cela est illustré à la figure 7.

Dans la position illustrée à la figure 4, il est possible de régler la position longitudinale du pied 24 par rapport à la glissière 26.

Pour immobiliser longitudinalement le pied 24 par rapport à la glissière 26, en partant de la position de réglage illustrée à la figure 4, l'utilisateur agit sur le support 54, au moyen d'un organe de manoeuvre non représenté sur les figures, pour faire passer celui-ci de sa position basse illustrée à la figure 4 à sa position haute illustrée à la figure 5.

La course verticale vers le haut du support 54 provoque un déplacement vertical vers le haut simultané des leviers 46 et de la fourche 68, la position verticale relative de cette dernière par rapport au support 54 et au levier 46 étant inchangée.

Cette course verticale provoque la pénétration des crochets 58, 60 dans les encoches 40 des bords supérieurs 32 et dont l'immobilisation longitudinale du pied 24 par rapport à la glissière 26.

Pour déverrouiller le mécanisme en vue de permettre son désengagement hors de la glissière 26, par un mouvement d'extraction verticale, l'utilisateur agit sur la barre 70 de commande de la fourche 68 dont il provoque un déplacement vertical vers le bas, à partir de la position illustrée à la figure 5, jusqu'à ce que la fourche 68 atteigne sa position extrême basse illustrée à la figure 6.

La course vers le bas de la fourche 68 provoque, par coopération des doigts de commande 62 successivement avec les tronçons 76, 78 et 80 des profils de cames 64 des branches 66, le rapprochement transversal mutuel vers l'intérieur, en direction du plan longitudinal médian P, des extrémités inférieures actives 56 des leviers de verrouillage 46, et ceci à l'encontre des efforts exercés par les ressorts 49.

L'orientation des tronçons intermédiaires inclinés 78 est telle qu'ils provoquent un pivotement des leviers 46 permettant l'échappement des extrémités en forme de crochets 58, 60 hors des encoches 40.

La distance séparant les tronçons verticaux supérieurs 80 est telle que la largeur transversale maximale L2 du mécanisme 42, qui est à nouveau en position contractée, est inférieure à la largeur L1 de la fente 38 pour permettre son extraction hors de la glissière 26.

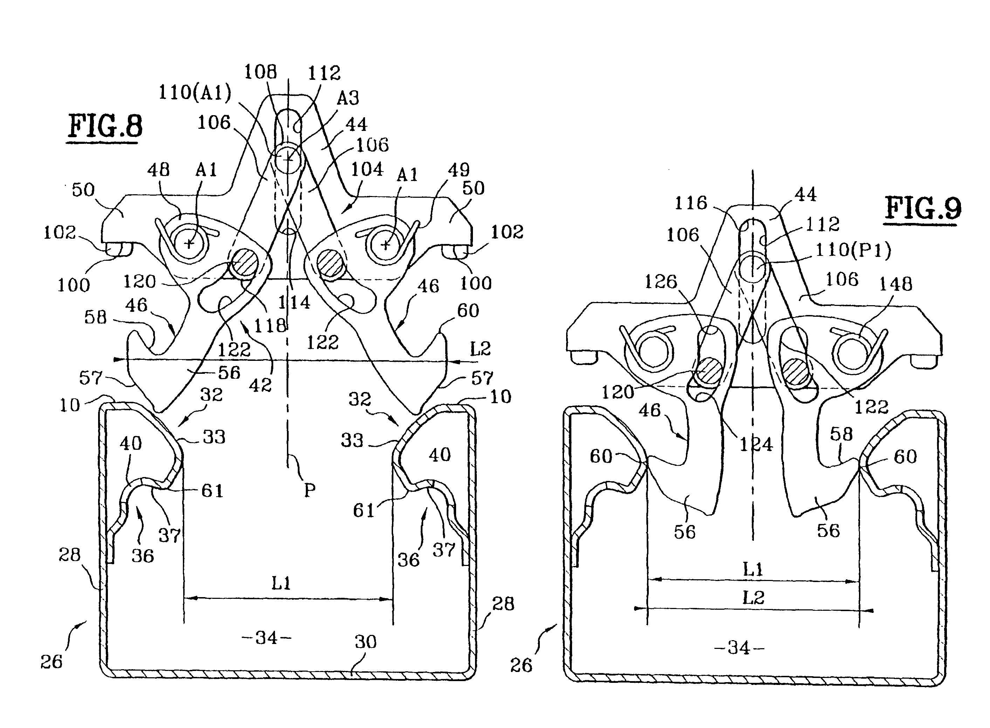

On décrira maintenant le deuxième mode de réalisation de l'invention qui est illustré aux figures 8 à 13 sur lesquelles des composants identiques, similaires ou analogues à ceux décrits précédemment sont désignés par les mêmes chiffres de référence.

Tout d'abord, dans son deuxième mode de réalisation, la glissière 26 diffère du mode de réalisation précédent en ce que ses bords supérieurs 32 sont conformés par un repli complet de la tôle, pour leur conférer une plus grande rigidité en présentant chacun une forme de caisson longitudinal supérieur.

La partie inférieure 44 du pied 24 est en une seule pièce, c'est-à-dire qu'il n'existe plus de support mobile verticalement et les extrémités supérieures 48 des leviers de verrouillage 46 du mécanisme expansible 42 sont ainsi montés articulés, autour de leurs axes longitudinaux A1, directement sur la partie inférieure 44, cette dernière comportant deux ailes 50 dont les faces inférieures 100 portent des patins 102 qui sont susceptibles de venir en butée verticalement, puis de coulisser longitudinalement, sur des portions de surfaces planes horizontales supérieures 103 en vis-à-vis des bords supérieurs 32 caissonnés de la glissière 26.

Pour la commande des mouvements de pivotement du levier de verrouillage 46 autour de leurs axes A1, il est prévu un dispositif 104.

Le dispositif 104 est constitué par deux tiges ou biellettes de commande 106, à action symétrique et opposée, dont chacune est montée articulée à son extrémité supérieure 108, autour d'un axe longitudinal A3 situé sur le plan vertical médian P, sur un pivot 110 d'orientation longitudinale qui constitue un coulisseau monté mobile verticalement dans une boutonnière verticale de guidage 112 formée dans la partie inférieure 44 du pied.

La boutonnière 112 est délimitée verticalement vers le bas par un fond 114 et vers le haut par un fond 116. Chaque tige 106 est inclinée vers le bas et vers l'extérieur et son extrémité inférieure 118 porte un doigt de commande 120 d'orientation longitudinale qui est reçu en coulissement dans une lumière correspondante en arc-de-cercle 122 formée dans la partie supérieure de chaque levier 46 et qui est centrée sur l'axe A1 d'articulation du levier correspondant.

Chaque lumière 122 est délimitée par un fond inférieur 124 et par un fond supérieur 126.

On décrira maintenant le mode de fonctionnement de l'agencement illustré aux figures 8 à 13.

La phase d'engagement du mécanisme 42 dans la glissière 26 est illustrée en deux parties consécutives aux figures 8 et 9.

Avant tout contact des surfaces inférieures 57 des parties inférieures actives 56 des leviers 46 avec les faces supérieures 33 des bords supérieurs 32 de la glissière 26, les leviers 46 sont sollicités élastiquement vers l'extérieur par les ressorts 49, leur position extrême étant déterminée par la venue en butée des doigts de commande 120 contre les fonds supérieurs 126 des lumières 122.

Le mouvement d'introduction vertical vers le bas provoque la coopération des surfaces inférieures incurvées 57 avec les faces supérieures 33 jusqu'à la position illustrée à la figure 9 permettant l'introduction des leviers 46 à l'intérieur 34 de la glissière 26, les mouvements de pivotement des leviers 46, en rapprochement mutuel, étant rendus possibles par la course libre des doigts de commande 120 à l'intérieur des lumières 122.

Aux figures 8 et 9, c'est-à-dire pendant l'introduction, le pivot 110 occupe toujours sa même position verticale P1 par rapport à la boutonnière 112 de la partie supérieure 44.

La course d'introduction verticale se termine lorsque les patins 102 sont en butée contre les portions de surface plane 103.

Les leviers 46 peuvent alors pivoter en éloignement l'un de l'autre jusqu'à ce que les doigts de commande 120 viennent en butée contre les fonds supérieurs 126 des lumières 122.

Les organes de manoeuvre (non représentés sur les figures) du mécanisme expansible 42 provoquent alors une remontée du pivot 110 vers sa position P2 à l'intérieur de la boutonnière 112.

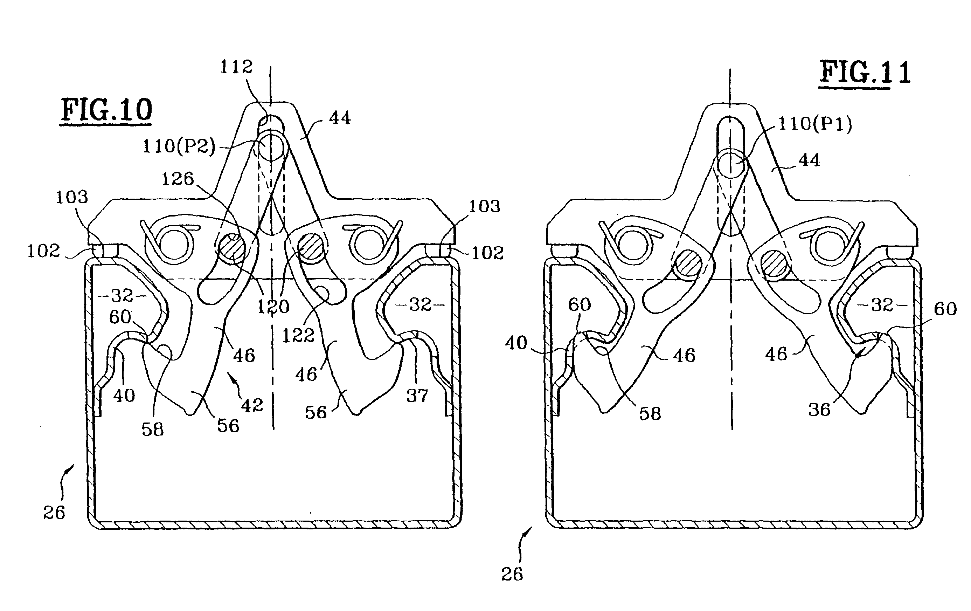

Dans la position dite de réglage illustrée à la figure 10, les faces supérieures 58, 60 formant crochets des extrémités inférieures actives 56 des leviers de verrouillage 46 sont en regard des surfaces inférieures 37 des bords supérieurs caissonnés 32 de la glissière 26 et la partie inférieure 44 est ainsi retenue verticalement vers le haut par rapport à la glissière 26, tandis que la partie inférieure 44 et le pied associé peuvent coulisser longitudinalement de manière à permettre le réglage de la position longitudinale du pied par rapport à la glissière 26.

Une fois la position réglée atteinte, l'utilisateur bloque la partie inférieure 44 longitudinalement par rapport à la glissière 26 en faisant pénétrer les crochets 58, 60 dans les encoches 40 des portions internes 36 des bords supérieurs caissonnés comme cela est illustré à la figure 11.

Pour ce faire, l'utilisateur agit sur les moyens de manoeuvre pour ramener le pivot 110 à sa position P1 ce qui procure une course supplémentaire de pivotement vers l'extérieur des leviers de verrouillage 46 permettant la pénétration des extrémités 60 des crochets 58 dans les encoches 40.

La partie 44 est ainsi bloquée longitudinalement par rapport à la glissière 26.

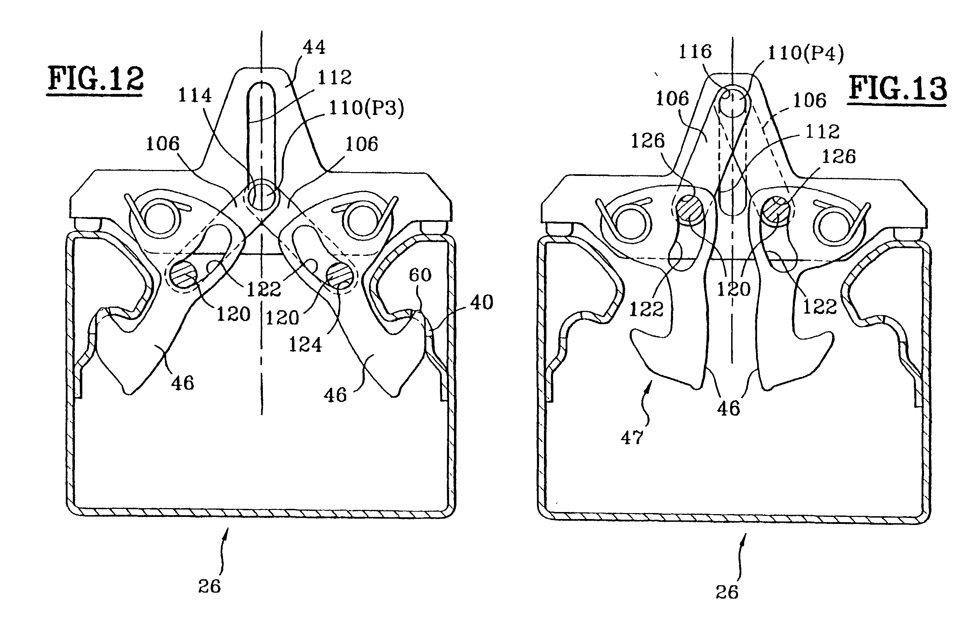

Il est possible de la verrouiller en position bloquée, comme cela est illustré à la figure 12.

A cet effet, l'utilisateur agit sur les moyens de manoeuvre pour amener le pivot 110 dans sa position maximale inférieure P3 illustrée à la figure 12 dans laquelle il est en butée contre le fond inférieur 114 de la boutonnière 112.

Cette course verticale vers le bas du pivot 110 provoque un déplacement des tiges 106 jusqu'à ce que les doigts de commande 120 soient en butée contre les fonds inférieurs 124 des lumières 122 empêchant ainsi tout pivotement des leviers 46 dans le sens de leur rapprochement mutuel en verrouillant alors les leviers 46 en position bloquée et verrouillée avec les crochets 58, 60 dans les encoches 40.

Pour dégager le mécanisme 42 verticalement vers le haut, en partant de la position illustrée à la figure 12, il est nécessaire de rapprocher transversalement les leviers de verrouillage 46 l'un vers l'autre.

Pour ce faire, l'utilisateur provoque un déplacement du pivot 110 vers sa quatrième position P4 qui est sa position haute maximale dans laquelle il est en butée contre le fond supérieur 116 de la boutonnière 112.

Cette manoeuvre verticalement vers le haut du pivot 110 provoque une remontée et un pivotement des tiges 106 qui, par l'action des doigts de commande 120 qui coopèrent avec les fonds supérieurs 126 des lumières 122, rapprochent mutuellement les leviers de verrouillage 46.

En fonction de l'application, et selon que par exemple le sous-ensemble 20 est constitué par un siège nécessitant d'être arrimé fermement, ou par un accessoire tel que par exemple une tablette, un seul ou plusieurs pieds 24 peuvent être réalisés conformément aux enseignements de l'invention, par exemple deux pieds avant ou deux pieds arrière.

## Revendications

1. Agencement pour le réglage de la position longitudinale, et le blocage en position réglée, d'un sous-ensemble (20) notamment d'un siège, sur le plancher horizontal de l'habitacle d'un véhicule automobile équipé de deux glissières (26) parallèles entre des ailes (28) latérales parallèles desquelles sont reçues en coulissement longitudinal des organes de guidage des déplacements longitudinaux et de verrouillage en position réglée de pieds (24) du sous-ensemble d'orientation sensiblement verticale, du type dans lequel l'extrémité inférieure (44) de l'un au moins des pieds est équipée d'un mécanisme (42) expansible mobile commandé entre:
- une première position, dite d'engagement ou de dégagement, dans laquelle deux organes de verrouillage (46) du mécanisme (42), à action symétrique et opposée par rapport à un plan longitudinal médian (P), sont dans une position escamotée vers l'intérieur dans laquelle leur encombrement transversal (L2) permet l'introduction, ou l'extraction, verticale du mécanisme dans la glissière (26) à travers une fente longitudinale médiane (38) de cette dernière délimitée par deux bords supérieurs (32) longitudinaux et parallèles de la glissière qui prolongent les ailes (28) vers l'intérieur ;
- et une seconde position extrême, dite de verrouillage, dans laquelle les deux organes (46, 58, 60) de verrouillage s'étendent chacun transversalement vers l'extérieur en regard d'une portion interne (36, 37, 40) de l'un des bords supérieurs (32) de la glissière (26) avec laquelle ils coopèrent, pour immobiliser verticalement et longitudinalement le pied (24) par rapport à la glissière (26);
**caractérisé en ce que** ladite portion interne (36) comporte une série d'encoches (40) réparties longitudinalement dont chacune constitue un cran de verrouillage dans lequel, dans la seconde position, un crochet (58, 60) d'un organe de verrouillage (46) est susceptible de pénétrer,
et **en ce que** le mécanisme (42) expansible est susceptible d'occuper, entre les première et seconde positions, au moins une position intermédiaire, dite de réglage, dans laquelle les deux organes de verrouillage (46) s'étendent en regard des portions internes (36) et hors des encoches (40) pour retenir verticalement le pied par rapport à la glissière et permettre des déplacements longitudinaux du pied par rapport à la glissière.

2. Agencement selon la revendication précédente, **caractérisé en ce que** les deux organes de verrouillage sont deux leviers de verrouillage (46) dont chacun est monté pivotant, au voisinage de son extrémité supérieure (48), autour d'un axe longitudinal (A1) d'articulation porté par le pied et dont la partie inférieure active (56) comporte une face supérieure qui est complémentaire du profil de la face inférieure (37) de la portion interne (36) d'un bord (32) de la glissière (26).

3. Agencement selon la revendication 2, **caractérisé en ce que** la face supérieure de l'extrémité inférieure (56) de chaque levier est conformée en ledit crochet (58, 60) qui coopère avec l'encoche (40) de ladite portion interne (36).

4. Agencement selon l'une quelconque des revendications 2 ou 3, **caractérisé en ce que** les leviers de verrouillage (46) sont rappelés élastiquement (49) vers leur position extrême de verrouillage.

5. Agencement selon la revendication 4, **caractérisé en ce que** la face inférieure (57) de l'extrémité inférieure (56) de chaque levier (46) est profilée de manière à coopérer avec la face supérieure de guidage (33) de ladite portion interne (36) pour escamoter le levier (46) transversalement vers l'intérieur, à l'encontre de ses moyens élastiques (49) de rappel, lors de l'engagement du mécanisme (42) dans la glissière (26).

6. Agencement selon l'une des revendications 4 ou 5, **caractérisé en ce que** le mécanisme (42) comporte une fourche (68) de commande des leviers (46) qui est montée mobile en coulissement vertical par rapport aux axes (A1) d'articulation des leviers (46) et dont les deux branches (70) coopèrent chacune par un profil de came (66) avec un pion (62) de commande porté par chaque levier (46) au voisinage de son extrémité inférieure (56), et dont les déplacements, à partir d'une position haute vers une position basse de déverrouillage, provoquent l'escamotage des leviers transversalement vers l'intérieur, à l'encontre de leurs moyens élastiques de rappel.

7. Agencement selon la revendication 6, **caractérisé en ce que** les leviers (46) et la fourche de commande (68) sont montés mobiles par rapport à un support (54) qui est monté coulissant verticalement sur la partie inférieure (44) du pied (24) entre une position basse et une position haute active de verrouillage, et **en ce que** la partie inférieure (54) du pied prend appui verticalement sur le fond (30) de la glissière par l'intermédiaire de moyens (82) de guidage de déplacements longitudinaux du pied (24) par rapport à la glissière (26).

8. Agencement selon l'une des revendications 4 ou 5, **caractérisé en ce que** la partie supérieure de chaque levier (46) comporte une lumière (122) en arc de cercle centrée sur son axe (A1) d'articulation dans laquelle est reçu un doigt (120) de commande porté par l'extrémité inférieure (118) d'une tige de commande (106) dont l'extrémité supérieure (108) est montée articulée, autour d'un axe longitudinal (A3), sur un coulisseau (110) de commande qui est mobile verticalement par rapport à la partie inférieure (44) du pied.

9. Agencement selon l'une quelconque des revendications précédentes, **caractérisé en ce que** le sous-ensemble (20) est un siège de véhicule automobile.

## Patentansprüche

1. Anordnung zur Einstellung der Längsposition und Blockierung in der eingestellten Position einer Teileinheit (20), insbesondere eines Sitzes, auf dem horizontalen Boden der Zelle eines Kraftfahrzeugs, umfassend zwei parallele Gleitschienen (26), wobei zwischen seitlichen parallelen Schenkeln (28) von diesen in Längsrichtung schiebbar Organe zur Führung der Längsbewegungen und Verriegelung in der eingestellten Position von annähernd vertikal ausgerichteten Füßen (24) der Teileinheit aufgenommen sind, von einer solchen Art, dass das untere Ende (44) von mindestens einem der Füße mit einem ausfahrbaren gesteuerten Mechanismus (42) versehen ist, der sich bewegen kann zwischen:
- einer ersten Position, der sogenannten Eingreif- oder Lösungsposition, in der sich zwei Verriegelungsorgane (46) des Mechanismus (42) mit in Bezug auf eine mittlere Längsebene (P) symmetrische und entgegengesetzte Wirkung in einer nach innen eingeklappten Position befinden, in der ihr Raumbedarf in Querrichtung (L2) das vertikale Einführen oder Herausziehen des Mechanismus durch einen mittleren Längsspalt (38) der Gleitschiene (26) ermöglicht, der durch zwei parallele obere Längsenden (32) der Gleitschiene begrenzt ist, welche die Schenkel (28) nach innen verlängern;
- und einer zweiten Endposition, der sogenannten Verriegelungsposition, in der sich die zwei Verriegelungsorgane (46, 58, 60) jeweils in Querrichtung nach außen strecken, so dass sie einem inneren Abschnitt (36, 37, 40) eines der oberen Ränder (32) der Gleitschiene (26) gegenüberliegen, mit welcher sie zusammenarbeiten, um den Fuß (24) in Bezug auf die Gleitschiene (26) vertikal und in Längsrichtung zu immobilisieren;
**dadurch gekennzeichnet, dass** der innere Abschnitt (36) eine Serie von in Längsrichtung verteilten Aussparungen (40) umfasst, von denen jede eine Verriegelungsrastkerbe darstellt, in welcher in der zweiten Position ein Haken (58, 60) eines Verriegelungsorgans (46) eindringen kann, und dadurch dass der ausfahrbare Mechanismus (42) zwischen der ersten und zweiten Position mindestens eine Zwischenposition, die sogenannte Einstellposition, einnehmen kann, in der sich die zwei Verriegelungsorgane (46) derart erstrecken, dass sie den inneren Abschnitten (36) gegenüberliegen und sich aus den Aussparungen (40) heraus erstrecken, um den Fuß in Bezug auf die Gleitschiene vertikal zu halten und Bewegungen des Fußes in Längsrichtung in Bezug auf die Gleitschiene zu ermöglichen.

2. Anordnung nach dem vorhergehenden Anspruch, **dadurch gekennzeichnet, dass** die zwei Verriegelungsorgane zwei Verriegelungshebel (46) sind, die jeweils in der Nähe ihres oberen Endes (48) um eine Längsgelenkachse (A1) schwenkbar montiert sind, die vom Fuß getragen wird, und deren aktiver unterer Teil (56) eine obere Fläche aufweist, die komplementär zum Profil der unteren Fläche (37) des inneren Abschnitts (36) eines Randes (32) der Gleitschiene (26) ist.

3. Anordnung nach Anspruch 2, **dadurch gekennzeichnet, dass** die obere Fläche des unteren Endes (56) jedes Hebels die Form des Hakens (58, 60) aufweist, der mit der Aussparung (40) des genannten inneren Abschnitts (36) zusammenarbeitet.

4. Anordnung nach einem der Ansprüche 2 oder 3, **dadurch gekennzeichnet, dass** die Verriegelungshebel (46) durch Federkraft (49) in ihre Verriegelungsendposition gedrückt werden.

5. Anordnung nach Anspruch 4, **dadurch gekennzeichnet, dass** die untere Fläche (57) des unteren Endes (56) jedes Hebels (46) ein Profil aufweist, um mit der oberen Führungsseite (33) des genannten inneren Abschnitts (36) zusammenzuarbeiten, um den Hebel (46) beim Einführen des Mechanismus (42) in die Gleitschiene (26) gegen dessen Rückholfedermittel (49) in Querrichtung nach innen einzuklappen.

6. Anordnung nach einem der Ansprüche 4 oder 5, **dadurch gekennzeichnet, dass** der Mechanismus (42) eine Gabel (68) zur Steuerung der Hebel (46) umfasst, die in Bezug auf die Gelenkachsen (A1) der Hebel (46) vertikal schiebbar montiert ist und deren zwei Zweige (70) jeweils durch ein Nockenprofil (66) mit einem Steuerungszapfen (62) zusammenarbeiten, der von jedem Hebel (46) in der Nähe seines unteren Endes (56) getragen wird, und deren Bewegungen von einer oberen Position zu einer unteren Entriegelungsposition das Einklappen der Hebel in Querrichtung nach innen gegen ihre Rückholfedermittel hervorrufen.

7. Anordnung nach Anspruch 6, **dadurch gekennzeichnet, dass** die Hebel (46) und die Steuerungsgabel (68) in Bezug auf eine Halterung (54) beweglich montiert sind, die am unteren Teil (44) des Fußes (24) vertikal schiebbar zwischen einer unteren und einer aktiven oberen Verriegelungsposition montiert ist, und dadurch dass sich der untere Teil (54) des Fußes vertikal gegen den Boden (30) der Gleitschiene abstützt, und zwar unter Zwischenschaltung von Mitteln (82) zur Führung von Längsbewegungen des Fußes (24) in Bezug auf die Gleitschiene (26).

8. Anordnung nach einem der Ansprüche 4 oder 5, **dadurch gekennzeichnet, dass** der obere Teil jedes Hebels (46) eine kreisbogenförmige Öffnung (122) umfasst, die auf seine Gelenkachse (A1) zentriert ist und die einen Steuerungsdaumen (120) aufnimmt, der vom unteren Ende (118) einer Steuerungsstange (106) getragen wird, deren oberes Ende (108) um eine Längsachse (A3) an einen Steuerungsschieber (110) angelenkt ist, der in Bezug auf den unteren Teil (44) des Fußes vertikal beweglich ist.

9. Anordnung nach einem der vorhergehenden Ansprüche, **dadurch gekennzeichnet, dass** die Teileinheit (20) ein Sitz eines Kraftfahrzeugs ist.

## Claims

1. Arrangement for adjusting the longitudinal position, and locking into the adjusted position, of a sub-assembly (20), particularly of a seat, on the horizontal floor of the passenger compartment of an automotive vehicle fitted with two parallel guide bars (26) between the lateral parallel wings (28) thereof are received, in a longitudinally sliding manner, members for guiding longitudinal displacements and locking into the adjusted position of feet (24) of the sub-assembly having a substantially vertical orientation, of the type in which the lower extremity (44) of at least one of the feet is provided with a movable, expandable mechanism (42) controlled between :
- a first position, known as engagement or disengagement position, in which two locking members (46) of the mechanism (42), having symmetrical action and being opposite with respect to a median longitudinal plane (P), are in a retracted position towards the interior, in which the space they occupy transversely (L2) allows the vertical introduction or removal of the mechanism into or out of the guide bar (26) through a longitudinal median slot (38) of said guide bar delimited by two longitudinal upper edges (32) parallel to the guide bar which extend the wings (28) towards the interior ;
- and a second extreme position, known as locking position, in which each of the two locking members (46, 58, 60) extends transversely towards the exterior opposite an internal portion (36, 37, 40) of one of the upper edges (32) of the slot (26) with which they cooperate in order to vertically and longitudinally block the foot (24) with respect to the guide bar (26) ;
**characterised in that** said internal portion (36) is provided with a series of notches (40) longitudinally distributed, each of which constitutes a locking notch in which, in the second position, a hook (58, 60) of a locking lever (46) is capable to penetrate,
and **in that** the expandable mechanism (42) is capable of occupying, between the first and second positions, at least one intermediate position, known as adjustment, in which each of the two locking members (46) extends toward said internal portions (36) and out of the notches (40) in order to vertically retain the foot with respect to the guide bar and to allow longitudinal displacements of the foot with respect to the guide bar.

2. Arrangement according to the preceding claim, **characterised in that** the two locking members (46), each of which is mounted in a pivoting manner, in the proximity of its upper extremity (48), about a longitudinal axle (A1) carried by the foot, and the lower active part (56) of which has an upper face that complements the profile of lower face of the internal portion (36) of an edge of the slot (26).

3. Arrangement according to claim 2, **characterised in that** the upper face of the lower extremity (56) of each lever is configured in said hook (58, 60) that cooperates with the notch (40) of said internal portion (36).

4. Arrangement according to anyone of claims 2 or 3, **characterised in that** the locking levers (46) are elastically (49) returned toward their extreme locking position.

5. Arrangement according to claim 4, **characterised in that** the lower face (57) of the lower extremity (56) of each lever (46) is shaped such as to cooperate with the upper guiding face (33) of said internal portion (36) in order to retract the lever (46) transversely towards the interior, in opposition to its elastic return means (49), when the mechanism (42) engages in the guide bar (26).

6. Arrangement according to one of claims 4 or 5, **characterised in that** the mechanism (42) is provided with a fork (68) for controlling the levers (46) that is mounted in a movable manner so as to slide vertically with respect to the axles (A1) of the levers (46), and the two prongs (70) of which each cooperates by means of a cam profile (66) with a control pin (62) carried by each lever (46) in the proximity of its lower extremity (56), and the displacements of which, from a higher position to a lower unlocking position, cause the retraction of the levers transversely towards the interior, opposite to their elastic return means.

7. Arrangement according to claim 6, **characterised in that** the levers (46) and the control fork (68) are mounted in a moveable manner with respect to a support (54) that is mounted in a vertically sliding manner on the lower part (44) of the foot (24), between a bottom position and a top active locking position, and **in that** the lower part (54) of the foot bears vertically upon the base (30) of the guide bar by virtue of means for guiding longitudinal displacements of the foot (24) with respect to the guide bar (26).

8. Arrangement according to one of claims 4 or 5, **characterised in that** the upper part of each lever (46) is provided with an aperture (122) in the shape of an arc of a circle, centred on the axle (A1) thereof, in which a control finger (120) is received, carried by the lower extremity (118) of a control rod (106), the upper extremity (108) of which is mounted in an articulated manner about a longitudinal axle (A3) on a control slider which is moveable vertically with respect to the lower part (44) of the foot.

9. Arrangement according to anyone of the preceding claims, **characterised in that** the sub-assembly (20) is a seat of an automotive vehicle.
